Europäisches Patentamt

European Patent Office

Office européen des brevets

(19)

(11) Veröffentlichungsnummer : **0 143 102**
**B1**

(12) **EUROPÄISCHE PATENTSCHRIFT**

(45) Veröffentlichungstag der Patentschrift :
27.05.87

(21) Anmeldenummer : 84890154.2

(22) Anmeldetag : 13.08.84

(51) Int. Cl.⁴ : **C 21 B 13/00, C 21 B 11/00**

(54) **Verfahren zur Herstellung von flüssigem Roheisen oder Stahlvorprodukten sowie Vorrichtung zur Durchführung des Verfahrens.**

(30) Priorität : 18.08.83 AT 2953/83

(43) Veröffentlichungstag der Anmeldung :
29.05.85 Patentblatt 85/22

(45) Bekanntmachung des Hinweises auf die Patenterteilung : 27.05.87 Patentblatt 87/22

(84) Benannte Vertragsstaaten :
**BE DE FR GB IT LU NL SE**

(56) Entgegenhaltungen :
EP-A- 0 010 627
EP-A- 0 063 924
DE-B- 1 086 256
DE-B- 1 267 692
FR-A- 1 243 733
FR-A- 2 215 478
FR-A- 2 433 580
US-A- 2 781 255

(73) Patentinhaber : **VOEST-ALPINE Aktiengesellschaft**
**Muldenstrasse 5**
**A-4020 Linz (AT)**

**Korf Engineering GmbH**
**Neusser Strasse 111**
**D-4000 Düsseldorf 1 (DE)**

(72) Erfinder : **Der Erfinder hat auf seine Nennung verzichtet**

(74) Vertreter : **Wolfram, Gustav, Dipl.-Ing.**
**Schwindgasse 7 P.O. Box 205**
**A-1041 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von flüssigem Roheisen oder Stahlvorprodukten aus teilchenförmigem eisenhältigem Material, insbesondere vorreduziertem Eisenschwamm, sowie zur Erzeugung von Reduktionsgas in einem Einschmelzvergaser, wobei durch Zugabe von Kohle und durch Einblasen von sauerstoffhältigem Gas mittels die Wand des Einschmelzvergasers durchsetzender Düsenrohre eine Fließbettzone (Wirbelbett) aus Kokspartikeln gebildet wird, in die das zu reduzierende eisenhältige Material eingebracht wird, sowie eine Vorrichtung zur Durchführung des Verfahrens.

Ein Verfahren dieser Art ist in der DE-OS 28 43 303 beschrieben, wobei das sauerstoffhältige Gas bzw. reiner Sauerstoff oberhalb des gebildeten Metallsumpfes bzw. der diesen bedeckenden Schlackenschicht durch einen Kranz von die Wand des Einschmelzvergasers durchsetzenden Düsenrohren eingeblasen wird. Auf diese Weise wird ein Wirbelbett aus Koksteilchen mit einer Hochtemperaturzone im unteren Bereich erzeugt. Das teilchenförmige eisenhältige Material, insbesondere vorreduzierter Eisenschwamm, und die stückige Kohle werden durch Chargieröffnungen in der Haube des Einschmelzvergasers von oben zugeführt, die fallenden Teilchen werden im Wirbelbett abgebremst und die eisenhältigen Teilchen werden während des Durchfallens durch das Koksfließbett reduziert und geschmolzen. Das aufgeschmolzene, von Schlacke bedeckte Metall sammelt sich am Boden des Einschmelzvergasers. Metall und Schlacke werden durch getrennte Abstichöffnungen abgezogen.

Bei dem bekannten Verfahren kann es zu Schwierigkeiten kommen, wenn Kohlen verwendet werden, die einen erhöhten Schwefelgehalt aufweisen. Üblicherweise beträgt der Schwefelgehalt von metallurgisch zu verwendenden Kohlen 0,7 bis 1,2 %, manchmal können aber auch Schwefelgehalte bis zu 2 % auftreten. Es muß daher bei Verfahren, in welchen durch Vergasung derartiger Kohle Reduktionsgas hergestellt wird, das zur Vorreduktion in einer kombinierten Vorreduktions-Einschmelzvergasungsanlage verwendet wird, damit gerechnet werden, daß das Reduktionsgas beträchtliche Schwefelgehalte aufweist. Etwa ein Drittel des in der Kohle enthaltenen Schwefels findet sich im Reduktionsgas und wird bei der Vorreduktion in einem Reduktionsschacht zu einem sehr großen Anteil als FeS an das Eisen gebunden.

Bei der üblichen Hüttenmetallurgie hat Hüttenkoks einen Schwefelgehalt von 0,7 bis 0,6 %. Dieser Schwefel bleibt jedoch beim Hochofenprozeß weitgehend in der Schlacke und führt zu keiner starken Aufschwefelung des Roheisens. Wird jedoch, wie bei dem einleitend bezeichneten Verfahren, Roheisen auf Basis eines Direktkohlereduktionsverfahrens hergestellt, so ist mit beträchtlich höheren Schwefelgehalten zu rechnen als bei der Hochofenmetallurgie.

Die Erfindung bezweckt die Vermeidung der geschilderten Schwierigkeiten bzw. Nachteile und stellt sich die Aufgabe, flüssiges Roheisen bzw. flüssige Stahlvorprodukte in einem Direktreduktionsverfahren mit niedrigerem Schwefelgehalt herstellen zu können, als dies bisher der Fall war ; das Verfahren ist im besonderen vorteilhaft für kombinierte Vorreduktions-Einschmelzvergasungsanlagen bestimmt, worin ein oder mehrere Reduktionsschächte mit einem Einschmelzvergaser zusammenarbeiten, mit der Maßgabe, daß an den Schwefelgehalt der einzusetzenden Kohle keine besonderen Anforderungen gestellt werden müssen.

Diese Aufgaben werden erfindungsgemäß bei einem Verfahren der eingangs bezeichneten Art dadurch gelöst, daß das zu reduzierende eisenhältige Material knapp oberhalb der das Wirbelbett erzeugenden Einblasgas-Düsenebene zugeführt wird.

Nach einer bevorzugten Ausführungsform der Erfindung wird das teilchenförmige eisenhältige Material durch die Wand des Einschmelzvergasers durchsetzende, im Wirbelbett mündende Chargierrohre zugeführt.

Diese Maßnahme beruht auf der Erkenntnis, daß im Wirbelbett ein wesentlich geringerer Schwefelgehalt vorhanden ist als im Reduktionsgas im oberen Teil des Einschmelzvergasers, in der sogenannten Beruhigungszone. Wenn das zu chargierende eisenhältige Material mit dem schwefelreichen Gas in der Beruhigungszone nicht in Berührung kommt, so ist das erschmolzene Eisen erheblich schwefelärmer als ein solches, welches — wie bekannt — durch die Beruhigungszone aus Chargieröffnungen in der Haube kommend durchfällt.

Eine weitere bevorzugte Ausführungsform besteht darin, daß das bei der Reaktion gebildete Reduktionsgas zur Abscheidung von staubförmigen Bestandteilen durch einen oder mehrere Zyklone geleitet wird und die dabei abgeschiedenen staubförmigen Partikel durch die Wand des Einschmelzvergasers durchsetzende, in Höhe des Wirbelbettes mündende Chargierrohre in den Einschmelzvergaser zurückgeführt werden.

Diese Maßnahme beruht auf der Erkenntnis, daß der Schwefel hauptsächlich in den vom Reduktionsgas mitgetragenen Stäuben enthalten ist, u. zw. überwiegend als CaS. Wenn die schwefelhältigen Stäube zusammen mit dem Reduktionsgas für die Vorreduktion in einen vorgeschalteten Vorreduktionsschacht geleitet werden, übt das im Reduktionsschacht in Form von Pellets, stückigem Erz etc. enthaltene Gut eine Filterwirkung insofern aus, als die schwefelhältigen Stäube zurückgehalten und quantitativ von der Schüttung aufgenommen werden. Sie gehen dann in den Einschmelzvergaser mit dem vorreduzierten Material zurück. Dabei stellt sich ein Schwefelgleichgewicht ein, mit der Folge, daß ein größerer Anteil Schwefel in das schmelzflüssige Metall gelangt. Werden jedoch, wie erfindungsgemäß vorgeschlagen, die Stäube abgetrennt und direkt dem Wirbelbett zugeführt, tritt diese frühere nachteilige Folge nicht mehr auf.

Nach einer anderen Ausführungsform der Erfindung kann eine Entschwefelungswirkung auch erreicht werden, indem das bei der Reaktion gebildete Reduktionsgas einer Entschwefelung unterworfen wird, bevor es als Reduktionsmittel in einem der Einschmelzvergasung vorhergehenden Vorreduktionsverfahren verwendet wird. Eine solche Entschwefelung kann durch Durchleiten des Reduktionsgases durch einen Entschwefelungsturm mit stückigem Entschwefelungsmittel, wie Stückkalk erfolgen.

Eine weitere vorteilhafte Ausführungsform besteht darin, daß durch weitere im Bereich des Wirbelbettes mündende Chargierrohre kalk- und/oder magnesiumhältige Zuschlagstoffe, wie Dolomit, Magnesit, Calciumoxid, Magnesiumoxid oder Mischungen davon in feinteiliger Form eingeblasen werden. Diese Ausführungsform, die ebenfalls auf die Herabsetzung des Schwefelgehaltes im erschmolzenen Eisen abzielt, beruht darauf, daß bei gleichzeitiger Anwesenheit von Kalk und direkt reduziertem Eisen der Schwefel sich im Temperaturbereich über 900 °C bevorzugt mit Kalk verbindet. Der Kalk- bzw. Dolomit- oder Magnesitstaub kann entweder gleichzeitig mit dem sauerstoffhältigen Trägergas eingeblasen werden oder mittels separater Chargierrohre. Vorteilhaft werden diese Zuschlagstoffe in Form ihrer Oxide verwendet, da hierbei keine Entsäuerungsarbeit aufzubringen ist.

Gemäß einer weiteren Ausführungsform der Erfindung wird unterhalb des Wirbelbettes eine Festbettzone vorgesehen, die vorzugsweise auf höherer Temperatur als die Schmelztemperatur des eisenhältigen Materials gehalten wird. Diese Ausführungsform hat den Vorteil, daß einer Reoxidierung des reduzierten und geschmolzenen Materials entgegengewirkt wird.

Die Erfindung umfaßt des weiteren eine Vorrichtung, bestehend aus einem feuerfest ausgekleideten Einschmelzvergaser mit Öffnungen für die Zugabe von Kohle oder anderen festen kohlenstoffhältigen Brennstoffen, eisenhältigem Material und für den Abzug des erzeugten Reduktionsgases, weiters mit Öffnungen für den Schlacken- und Schmelzenabstich, wobei ein unterer Abschnitt zum Auffangen des geschmolzenen Metalles und der flüssigen Schlacke, ein mittlerer Abschnitt zur Aufnahme eines Kokswirbelbettes und anschließend an letzteres ein oberer Abschnitt als Beruhigungsraum, sowie im unteren Bereich des mittleren Abschnittes die Wand des Einschmelzvergasers durchsetzende Düsenrohre zum Einleiten von sauerstoffhältigem Trägergas und gegebenenfalls von Brennstoffen für die Bildung des Wirbelbettes vorgesehen sind, welche Vorrichtung dadurch gekennzeichnet ist, daß knapp oberhalb der von den Düsenrohren gebildeten Ebene im Bereich der Wirbelbettzone die Wand des Einschmelzvergasers durchsetzende Chargierrohre zur Einführung des aufzuschmelzenden eisenhältigen Materials sowie zur Einführung von aus dem Reduktionsgas abgeschiedenen Stäuben und gegebenenfalls von calcium- bzw. magnesiumoxid- oder -carbonathältigen Zuschlagstoffen vorgesehen sind.

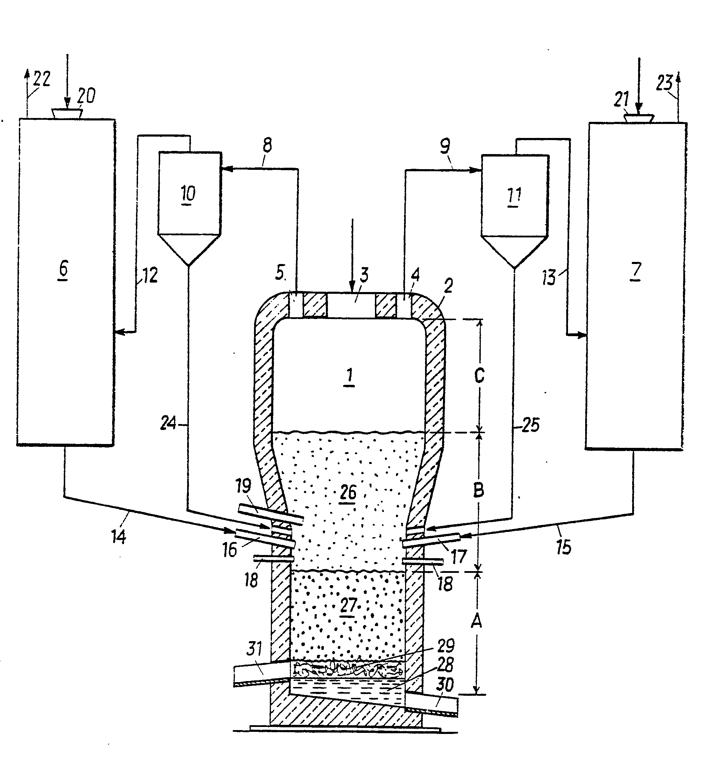

Das erfindungsgemäße Verfahren und die Vorrichtung zu seiner Durchführung sind in der Zeichnung schematisch erläutert.

Mit 1 ist ein feuerfest ausgekleideter Einschmelzvergaser bezeichnet, der einen unteren Abschnitt A, einen mittleren Abschnitt B und einen oberen, im Durchmesser erweiterten Abschnitt C aufweist. Der untere Abschnitt A ist zum Auffangen von geschmolzenem Metall, Schlacke und einem darüber befindlichen Festbett aus Koksteilchen bestimmt, der mittlere Abschnitt B für die Ausbildung des Wirbelbettes aus Koksteilchen und einem sauerstoffhältigen Trägergas, und der obere Abschnitt C dient als Beruhigungsraum für das sich bildende Reduktionsgas.

In der Haube 2 des Einschmelzvergasers 1 ist eine Öffnung 3 zum Einbringen von Kohleteilchen vorgesehen. Weiters sind in der Haube Öffnungen 4 und 5 zum Ableiten des entstehenden Reduktionsgases vorgesehen. Der im Zeichnungsschema dargestellte Einschmelzvergaser arbeitet mit zwei Vorreduktionsschächten 6 und 7 zusammen und ist mit diesen durch Leitungen 8, 9 verbunden. In diesen Verbindungsleitungen 8, 9 ist jeweils ein Zyklon 10, 11 zur Staubabscheidung eingeschaltet, wobei das entstaubte Gas durch die Leitungen 12, 13 in die Vorreduktionsschächte in deren unteren Teil eingeführt wird.

Vom Boden der Vorreduktionsschächte 6, 7 führen Leitungen 14, 15 zum Mittelteil B des Einschmelzvergasers, durchsetzen die Wand des Einschmelzvergasers an dieser Stelle und münden als Chargierrohre 16, 17 für vorreduziertes eisenhältiges Material im Innenraum des Einschmelzvergasers. Knapp unterhalb dieser Chargierrohre ist ein Kranz von die Wand des Einschmelzvergasers durchsetzenden Düsenrohren 18 zum Einblasen von sauerstoffhältigem Trägergas vorgesehen. Weiters können im Bereich des Abschnittes B noch zusätzliche Chargierrohre 19 für kalkhältige Zuschlagstoffe vorgesehen sein. Die Vorreduktionsschächte weisen im oberen Teil Chargieröffnungen 20, 21 zur Zuführung von Eisenerz und Gasableitungen 22, 23 auf. Vom Bodenteil der Zyklone 10, 11 führen Leitungen 24, 25 zurück zum Einschmelzvergaser. Sie münden mit die Wand des Einschmelzvergasers durchsetzenden Stutzen in den Abschnitt B des Einschmelzvergasers.

Die Funktion der Anlage ist folgende :

In den Einschmelzvergaser werden kontinuierlich durch die Öffnung 3 Kohle- oder Koksteilchen eingebracht, die nach unten durchfallen. Durch Einleiten von sauerstoffhältigem Gas durch den Düsenkranz 18 wird in Abhängigkeit von dem angewandten Druck des Gases und der Größe der chargierten Teilchen im Abschnitt B ein Wirbelbett 26 bzw. eine Fließbettzone aus Koksteilchen und im Abschnitt A ein Festbett 27 aus Koksteilchen gebildet. Den Vorreduktionsschächten wird kontinuierlich durch die oberen Öffnungen 20, 21 Eisenerz in stückiger Form zugeführt und das unter der Einwirkung des Reduktionsgases in den Vorreduktionsschächten 6, 7 vorreduzierte Material, insbesondere Eisenschwamm, durch die Leitungen 14, 15 und durch die Chargierrohre 16, 17 in die Wirbelbettzone 26 direkt eingeführt.

Das bei der Reduktion entstehende Reduktionsgas wird nach Passieren des Beruhigungsraumes C aus den Öffnungen 4 und 5 in den Zyklonen 10, 11 entstaubt. Das entstaubte Gas wird, wie schon erwähnt, in die Vorreduktionsschächte 6, 7 eingeleitet. Der abgeschiedene Staub wird aus den Böden der Zyklone durch die Leitungen 24, 25 in die Wirbelbettzone 26 zurückgeleitet.

Das bei der Reduktion gebildete flüssige Eisen sammelt sich im Bodenteil des Einschmelzvergasers und bildet einen Sumpf 28, der von einer Schlackenschicht 29 bedeckt ist. Metall und Schlacke werden durch Abstichöffnungen 30, 31 abgeführt.

### Patentansprüche

1. Verfahren zur Herstellung von flüssigem Roheisen oder Stahlvorprodukten aus teilchenförmigem eisenhältigem Material, insbesondere vorreduziertem Eisenschwamm, sowie zur Erzeugung von Reduktionsgas in einem Einschmelzvergaser (1), wobei durch Zugabe von Kohle und durch Einblasen von sauerstoffhältigem Gas mittels die Wand des Einschmelzvergasers durchsetzender Düsenrohre (18) eine Fließbettzone (Wirbelbett) (26) aus Kokspartikeln gebildet wird, in die das zu reduzierende eisenhältige Material eingebracht wird, dadurch gekennzeichnet, daß das zu reduzierende eisenhältige Material knapp oberhalb der das Wirbelbett (26) erzeugenden Einblasgas-Düsenebene (18) zugeführt wird.

2. Verfahren nach Anspruch 1, dadurch gekennzeichnet, daß das teilchenförmige eisenhältige Material durch die Wand des Einschmelzvergasers durchsetzende, im Wirbelbett mündende Chargierrohre (16, 17) zugeführt wird.

3. Verfahren nach Anspruch 1 oder 2, dadurch gekennzeichnet, daß das bei der Reaktion gebildete Reduktionsgas zur Abscheidung von staubförmigen Bestandteilen durch einen oder mehrere Zyklone (10, 11) geleitet wird und die dabei abgeschiedenen staubförmigen Partikel durch die Wand des Einschmelzvergasers durchsetzende, in Höhe des Wirbelbettes (26) mündende Chargierrohre (16, 17) in den Einschmelzvergaser (1) zurückgeführt werden.

4. Verfahren nach den Ansprüchen 1 bis 3, dadurch gekennzeichnet, daß das bei der Reaktion gebildete Reduktionsgas einer Entschwefelung unterworfen wird, bevor es als Reduktionsmittel in einem der Einschmelzvergasung vorhergehenden Vorreduktionsverfahren verwendet wird.

5. Verfahren nach den Ansprüchen 1 bis 4, dadurch gekennzeichnet, daß durch weitere im Bereich des Wirbelbettes (26) mündende Chargierrohre (19) kalk- und/oder magnesiumhältige Zuschlagstoffe, wie Dolomit, Magnesit, Calciumoxid, Magnesiumoxid oder Mischungen davon in feinteiliger Form eingeblasen werden.

6. Verfahren nach den Ansprüchen 1 bis 5, dadurch gekennzeichnet, daß unterhalb des Wirbelbettes (26) eine Festbettzone (27) vorgesehen wird, die vorzugsweise auf höherer Temperatur als die Schmelztemperatur des eisenhältigen Materials gehalten wird.

7. Vorrichtung zur Durchführung des Verfahrens nach einem der Ansprüche 1 bis 6, bestehend aus einem feuerfest ausgekleideten Einschmelzvergaser (1) mit Öffnungen (3) für die Zugabe von Kohle oder anderen festen kohlenstoffhältigen Brennstoffen, eisenhältigem Material und für den Abzug des erzeugten Reduktionsgases, weiters mit Öffnungen für den Schlacken- und Schmelzenabstich, wobei ein unterer Abschnitt (A) zum Auffangen des geschmolzenen Metalles und der flüssigen Schlacke, ein mittlerer Abschnitt (B) zur Aufnahme eines Kokswirbelbettes (26) und anschließend an letzteres ein oberer Abschnitt (C) als Beruhigungsraum, sowie im unteren Bereich des mittleren Abschnittes die Wand des Einschmelzvergasers durchsetzende Düsenrohre (18) zum Einleiten von sauerstoffhältigem Trägergas und gegebenenfalls von Brennstoffen für die Bildung des Wirbelbettes (26) vorgesehen sind, dadurch gekennzeichnet, daß knapp oberhalb der von den Düsenrohren (18) gebildeten Ebene im Bereich der Wirbelbettzone (26) die Wand des Einschmelzvergasers (1) durchsetzende Chargierrohre (16, 17) zur Einführung des zu reduzierenden eisenhältigen Materials sowie zur Einführung von aus dem Reduktionsgas abgeschiedenen Stäuben (24, 25) und gegebenenfalls von calcium- bzw. magnesiumoxid- oder carbonathältigen Zuschlagstoffen vorgesehen sind.

### Claims

1. A process for the production of molten pig iron or steel pre-products from particulate ferrous material, in particular pre-reduced iron sponge, as well as for the production of reduction gas in a meltdown gasifier (1), wherein a fluidized-bed zone (26) is formed of coke particles by the addition of coal and by blowing in oxygen-containing gas by means of nozzle pipes (18) penetrating the wall of the meltdown gasifier, into which the ferrous material to be reduced is introduced, characterised in that the ferrous material to be reduced is supplied closely above the blow-in gas nozzle plane (18) generating the fluidized bed (26).

2. A process according to claim 1, characterised in that the particulate ferrous material is supplied through charging pipes (16, 17) penetrating the wall of the meltdown gasifier and entering in the fluidized bed.

3. A process according to claim 1 or 2, characterised in that the reduction gas formed at the reaction is conducted through one or several cyclones (10, 11) to separate dusty components, and the dusty particles separated are returned into the meltdown gasifier (1) through charging pipes (16, 17) penetrating the wall of the meltdown gasifier and entering at the height of the fluidized bed (26).

4. A process according to claims 1 to 3, characterised in that the reduction gas formed at the reaction is subjected to desulfurization before being used as a reductant in a pre-reduction process preceding meltdown gasification.

5. A process according to claims 1 to 4, characterised in that lime- and/or magnesium-containing fluxes, such as dolomite, magnesite, calcium oxide, magnesium oxide or mixtures thereof are blown in in fine-particle form through further charging pipes (19) entering in the region of the fluidized bed (26).

6. A process according to claims 1 to 5, characterised in that a fixed-bed zone (27) is provided below the fluidized bed (26), which advantageously is maintained at a higher temperature than the melting temperature of the ferrous material.

7. An arrangement for carrying out the process according to any of claims 1 to 6, comprising a refractorily lined meltdown gasifier (1) including openings (3) for the addition of coal or other solid carbon-containing fuels, ferrous material, and for the discharge of the reduction gas produced, furthermore, openings to tap slag and melt, a lower section (A) being provided to collect the melted metal and liquid slag, a central section (B) being provided to receive a coke fluidized-bed (26) and following upon the latter an upper section (C) being provided as a killing space, as well as nozzle pipes (18) penetrating the wall of the meltdown gasifier in the lower region of the central section to inject oxygen-containing carrier gas and, if necessary, fuels for the formation of the fluidized bed (26), characterised in that closely above the plane formed by the nozzle pipes (18) charging pipes (16, 17) penetrating the wall of the meltdown gasifier (1) in the region of the fluidized-bed zone (26) are provided to introduce the ferrous material to be reduced as well as to introduce dusts (24, 25) separated from the reduction gas and, if desired, fluxes containing calcium oxide, magnesium oxide, calcium carbonate and/or magnesium carbonate.

**Revendications**

1. Procédé pour la production de fonte liquide ou de produits précurseurs de l'acier à partir d'une matière ferreuse en particules, en particulier d'éponge de fer préréduite, ainsi que pour la production de gaz réducteur dans un gazéificateur à fusion (1), dans lequel, par addition de charbon et insufflation d'un gaz contenant de l'oxygène, au moyen de lances (18) qui traversent la paroi du gazéificateur à fusion, on forme une zone de lit fluidisé (lit turbulent 26) composée de particules de coke, dans laquelle on introduit la matière ferreuse à réduire, caractérisé en ce que la matière ferreuse à réduire est introduite juste au-dessus du plan des lances (18) de gaz de soufflage qui produisent le lit turbulent (26).

2. Procédé selon la revendication 1, caractérisé en ce que la matière ferreuse en particules est chargée à travers des tubes de chargement (16, 17) qui traversent la paroi du gazéificateur à fusion et débouchent dans le lit turbulent.

3. Procédé selon la revendication 1 ou la revendication 2, caractérisé en ce que, pour séparer les constituants pulvérulents, on fait passer le gaz réducteur formé au cours de la réaction à travers un ou plusieurs cyclone(s) (10, 11) et on renvoie les particules pulvérulentes ainsi séparées dans le gazéificateur à fusion (1) par des tubes de chargement (16, 17) qui traversent la paroi du gazéificateur à fusion et qui débouchent au niveau du lit turbulent (26).

4. Procédé selon les revendications 1 à 3, caractérisé en ce que le gaz réducteur formé au cours de la réaction est soumis à une désulfuration avant d'être utilisé comme agent réducteur dans un traitement de préréduction qui précède la gazéification-fusion.

5. Procédé selon les revendications 1 à 4, caractérisé en ce que des additifs contenant de la chaux et/ou du magnésium, comme la dolomie, la magnésie, de l'oxyde de calcium, de l'oxyde de magnésium ou des mélanges de ces susbtances sont insufflés sous la forme de particules fines, par d'autres tubes de chargement (19) qui débouchent dans la région du lit turbulent (26).

6. Procédé selon les revendications 1 à 5, caractérisé en ce qu'au-dessous du lit turbulent (26), est prévue une zone de lit fixe qui est de préférence maintenue à une température supérieure à la température de fusion de la matière ferreuse.

7. Dispositif pour la mise en œuvre du procédé selon l'une des revendications 1 à 6, composé d'un gazéificateur à fusion (1) à revêtement réfractaire muni d'ouvertures (3) pour l'introduction de charbon ou d'autres combustibles solides carbonés et d'une matière ferreuse et pour l'évacuation du gaz réducteur produit et, en outre, d'ouvertures pour la coulée du laitier et du métal fondu, dans lequel il est prévu un segment inférieur destiné à recueillir le métal fondu et le laitier liquide, un segment central (B) destiné à contenir un lit turbulent de coke (26) et, à la suite de ce dernier, un segment supérieur (C) servant de chambre de tranquilisation, ainsi que, dans la région inférieure du segment central, des lances (18) qui traversent la paroi du gazéificateur à fusion et qui servent à introduire un gaz porteur contenant de l'oxygène et, éventuellement, des combustibles destinés à la formation du lit turbulent (26), caractérisé en ce qu'il comprend, à petite distance au-dessus du plan formé par les lances (18), dans la région de la zone à lit turbulent (26), des tubes de chargement (16, 17) qui traversent la paroi du gazéificateur à fusion (1) servant à introduire la matière ferreuse à réduire ainsi qu'à introduire des poussières (24, 25) séparées du gaz réducteur, et, éventuellement, des additifs contenant de l'oxyde ou du carbonate de calcium ou de magnésium.